# EUROPEAN PATENT SPECIFICATION

(11) **EP 3 513 056 B1**
(45) Date of publication and mention of the grant of the patent: **31.01.2024**
(21) Application number: 17767828.1
(22) Date of filing: 14.09.2017
(51) Int. Cl.: F02M 61/18, F02B 23/06

(54) **FUEL INJECTOR AND PISTON BOWL**
KRAFTSTOFFEINSPRITZVENTIL UND KOLBENMULDE
INJECTEUR DE CARBURANT ET BOL DE PISTON

(30) Priority: 16.09.2016 GB 201615843
(43) Date of publication of application: 24.07.2019
(73) Proprietor: Perkins Engines Company Limited, Eastfield, Peterborough PE1 5FQ (GB)
(72) Inventor: DARLEY, James, Peterborough Cambridgeshire PE6 9BB (GB); BRADLEY, Joe, Northampton Northamptonshire NN5 5AP (GB); LUCAS, Hilary, Peterborough Cambridgeshire PE1 5BL (GB)
(74) Representative: Novagraaf Group
(86) International application number: PCT/EP2017/073215
(87) International publication number: WO 2018/050790

(56) References cited:
- EP-A2- 1 571 324
- FR-A1- 2 769 342
- US-A1- 2013 062 441
- US-A1- 2014 251 261
- US-A1- 2015 198 070
- US-A1- 2016 076 477
- US-A1- 2016 115 925

## Description

### Technical Field

This invention relates generally to fuel injectors for internal combustion engines, and particularly to fuel injectors for diesel engines.

### Background

Combustion of fuel in the combustion chambers of engines may produce particulate matter, such as soot, and NOₓ emissions. There are on-going concerns for production of sufficient engine power while minimizing the NOₓ emissions in exhaust gases and minimising the amount of particulate matter retained in the combustion chamber and released through exhaust gases. Exhaust gas after-treatment devices including catalyst and particulate filters have been generally adopted to reduce NOₓ and particulate matter emissions in exhaust gases.

Particulate matter and NOₓ emissions may be dependent on factors relating to engine design and operation. These factors may include engine compression ratio, combustion chamber structure and fuel injection spray pattern. These factors may be exploited to reduce further the level of NOₓ and particulate matter emissions.

EP 2086151, in the name of Perkins Engines Company Limited, discloses a fuel injector with a spray nozzle having a tip and a plurality of spray discharge orifices formed on the tip.

US 2015/198070 discloses a fuel injector having a number of apertures in the range of six to ten.

EP 1571324 discloses a two-stroke internal combustion diesel engine, suitable for locomotive applications having a modified fuel injector nozzle.

US 2014/251261 discloses an injection nozzle for the direct injection of a liquid fuel into a cylinder chamber of a piston engine that includes multiple spray holes for generating injection jets. The multiple spray holes are distributed on a nozzle body of the injection nozzle in the peripheral direction. At least one pair of spray holes adjoining in the peripheral direction is provided, the longitudinal center axes of which enclose a pair angle in the peripheral direction that is smaller than an adjacent angle which is enclosed between the longitudinal center axis of the respective spray hole of the spray hole pair in the peripheral direction and a longitudinal center axis of a spray hole adjoining the spray hole pair in the peripheral direction.

US 2016/076477 discloses a dual-mode fuel injector having an internal part containing a variable volume chamber space which fills with fuel at common rail pressure and a plunger which is operable to force fuel out of the variable volume chamber space and to be injected out of the nozzle through the injection orifices at amplified pressure greater than common rail pressure. The plunger and the internal part have respective surfaces which come into mutual abutment during filling of the variable volume chamber space with fuel at common rail pressure and which, when in mutual abutment, create a seal which seals fuel in the variable volume chamber space against escape from the variable volume chamber space past the seal.

FR 2769342 discloses a fuel injector for a diesel engine with direct central vertical injection, having its nozzle orifices positioned non uniformly and with different diameters so that the fuel jets emerging from them when the pintle opens are asymmetrical. The orifices can be set at different angles to one another, and larger orifices can alternate with smaller ones.

US 2013/062441 discloses a fuel injector providing an oncoming flow, that is uniform and stable in time, of the spray-discharge orifices. The fuel injector includes at least one excitable actuator and a valve element that is movable along a longitudinal valve axis, which collaborates in a sealing manner with a valve seat. Upstream of the valve seat, circumferentially a plurality of flow-through regions are provided, between which there are guidance regions for the valve element. The spray-discharge orifices downstream from the valve seats, whose number differs from the number of the flow-through regions, discharge the fuel finely atomized. At least two flow-through regions differ in size, such as circumferential width and/or radial depth, and/or contour. The fuel injector directly injects fuel into a combustion chamber of an engine using compression of a fuel/air mixture and spark ignition.

US 2016/115925 discloses a fuel injector for injecting fuel vapor into a combustion chamber of an internal combustion engine is disclosed. The fuel injector may be configured to reduce production of particulate matter during combustion of fuel. The fuel injector may have a spray nozzle having a tip and a plurality of spray discharge orifices formed on the tip. The plurality of spray discharge orifices being configured to discharge fuel vapor at a flow rate of 750-795 cc/min.

The present invention is directed, at least in part, to improving one or more aspects of the prior art system.

### Brief Summary of the invention

In a first aspect, the invention describes a combustion cylinder assembly for an internal combustion engine, disclosing the features of claim 1.

The disclosure also provides an internal combustion engine comprising one of more combustion cylinder assemblies.

### Brief Description of the Drawings

Figure 1 shows a cross sectional view through an upper portion of a single cylinder and lower parts of the fuel injector including those that protrude into the cylinder;
Figure 2 shows a cross sectional view through an upper portion of a single cylinder in an upward direction looking towards the fuel injector;
Figure 3 shows a close up view of the fuel injector in situ;
Figure 4 shows a cross sectional view similar to Figure 1 and with dimensions labelled;
Figure 5 shows a cross sectional view of the injector similar to Figure 3 but with the dimensions labelled;
Figure 6 shows a cross section through the injector on a plane orthogonal to the axis of the injector;
Figure 7 shows a schematic representation of the injector tip, illustrating the cone angle of injection; and
Figure 8 shows the position of the orifices of the injector relative to in inlet of the injector.

### Detailed Description

This invention generally relates to a fuel injector 10 for increasing combustion efficiency and reducing particulate matter production in an internal combustion engine 100.

The fuel injector 10 may be assembled to a combustion chamber 110 of an internal combustion engine 100. Fuel injector 10 may inject fuel directly into an engine cylinder 120, in particular into the combustion chamber 110 of the engine cylinder 120.

An internal combustion engine 100 may have a plurality of cylinders 120, each cylinder 120 including a piston 130 configured to reciprocate within the cylinder 120 and an injector 10 at an upper end of the cylinder 120 and configured to facilitate injection of fuel into the cylinder 120 for combustion within the cylinder 120 to effect movement of the piston 130. Each piston 130 may comprise a piston crown 150 at an end of the piston facing the injector. Each piston crown 150 may comprise an annular surface 160 at a radially outer part of the piston crown 150 and a piston bowl 170 recessed relative to and radially inward of the annular surface 160. The piston 130 may have a central axis R.

The cylinder 130 may have a cylinder head 200. The walls of the cylinder 120 may be provided with a cylinder liner (not shown). The fuel injector 10 may be positioned in the cylinder head 200. The central axis P of the fuel injector 10 may be substantially aligned with the central axis R of the piston 130. The fuel injector 10 may have a plurality of spray discharge orifices 24 that are configured to inject fuel into the combustion chamber 110.

In some embodiments, there may be a glow plug (not shown) projecting into the cylinder.

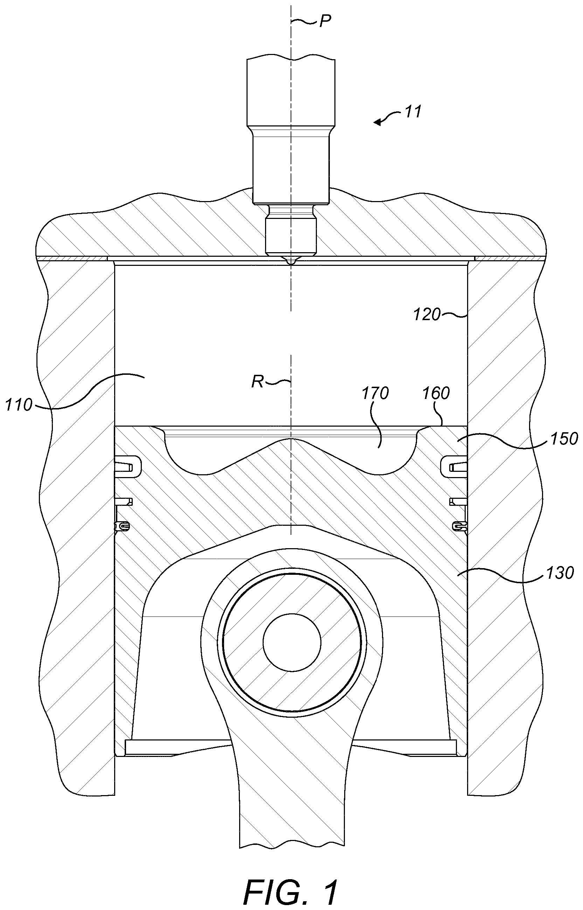

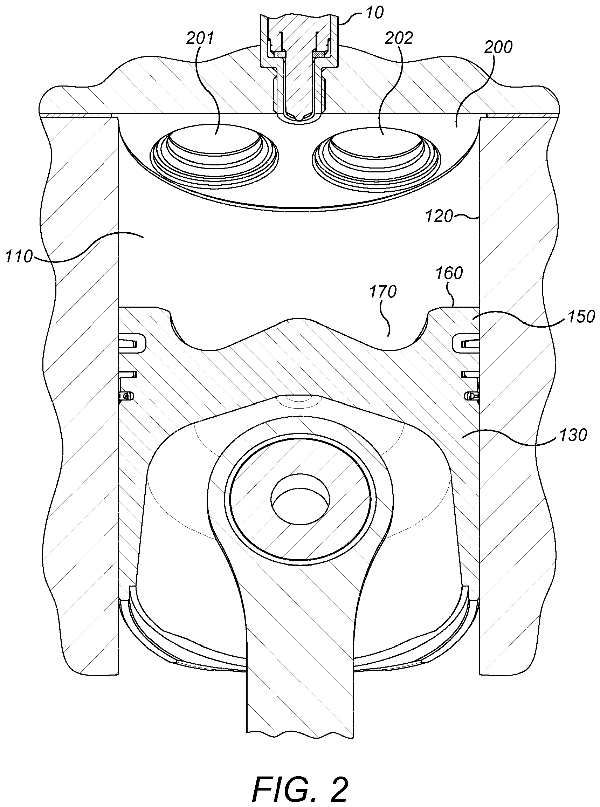

Figure 2 shows many of the features of Figure 1 but from a different perspective such that an oxidant inlet 201 and exhaust outlet 202 of the combustion chamber 110 are visible in the cylinder head 200.

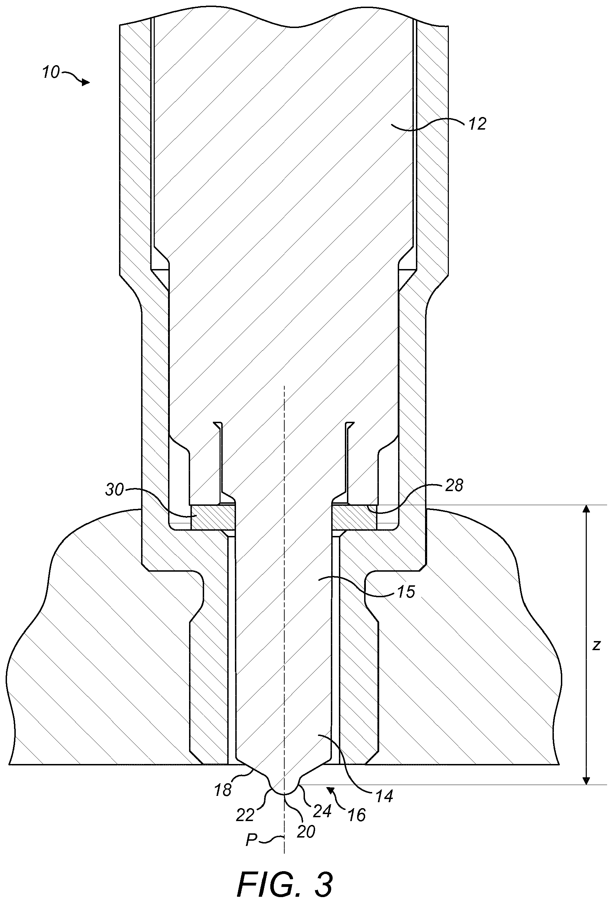

As shown in Figure 3, the fuel injector 10 has an injector body 12 and a spray nozzle 14. Injector body 12 may include one or more electrical actuators that control the timing and duration of fuel vapour injection. The one or more electrical actuators may include a biasing spring (not shown), a coil (not shown) and an armature (not shown) that may be attached to a valve member (not shown). The actuator may be any suitable electrical actuator, such as a linear actuator having a closed position. It may be a piezoelectric actuator, for example. The actuator may be a solenoid actuator. The valve member may be a needle valve member or a poppet valve member. The skilled person would appreciate that other suitable valve members, such as spool or ball valve members, could be substituted.

The injector body 12 may have a central axis P. The injector body 12 may be radially substantially symmetrical about central axis P, at least along a portion of its length. The injector body 12 may be mountable to the combustion chamber 120 of an internal combustion engine 100.

The spray nozzle 14 may extend longitudinally from the injector body 12. Spray nozzle 14 may extend from the injector body 12 in a direction along central axis P. Spray nozzle 14 may be connected to the injector body 12. Spray nozzle 14 may have a central axis that is coincident with central axis P. Spray nozzle 14 and injector body 12 may have central axis P as a common axis.

Spray nozzle 14 may be circular in cross section. Spray nozzle 14 may have a diameter of 7.2 mm. Spray nozzle 14 may be radially symmetrical about central axis P.

Spray nozzle 14 may have a nozzle body 15 and a tip 16. Nozzle body 15 may be cylindrical. Tip 16 may extend longitudinally from the nozzle body 15. Spray nozzle 14 may extend from the spray nozzle 14 in a direction along central axis P. Tip 16 may have a central axis that is coincident with central axis P. Spray nozzle 14, injector body 12 and tip 16 may have central axis P as a common axis. Tip 16 may be radially symmetrical about central axis P.

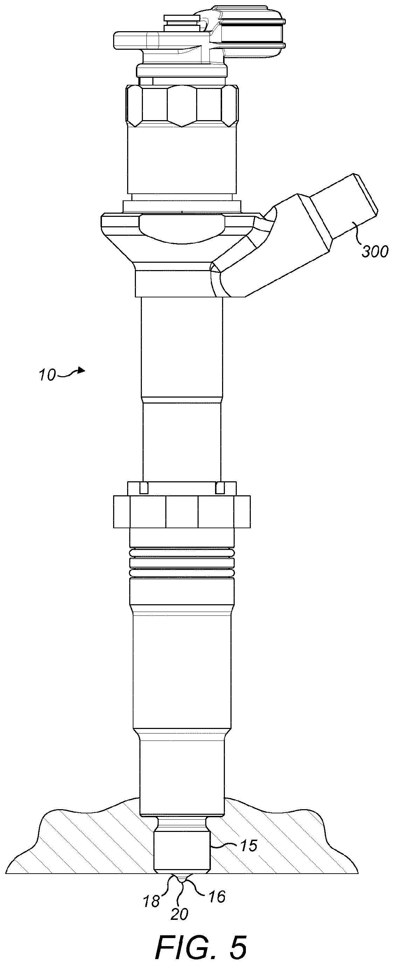

A fuel passage (not shown) may be provided in the fuel injector 10 for flow of pressurised fuel. The fuel passage may lead from the injector body 12 to the spray nozzle 14 and to the tip 16. Fuel may be supplied to the fuel passage via an injector body inlet 300 that projects from the injector body 12. The injector body inlet 300 may project from an outer circumference of the injector body 12 and may have a component of direction projecting radially and a component of direction projecting axially away from the distal end 20, as shown in Figure 5.

A needle valve member (not shown) may be positioned in the fuel passage to control the flow of the fuel. The needle valve member may abut against a valve seat (not shown) disposed in the spray nozzle 14. The needle valve member may lift off the valve seat by a distance of between 0.34 mm and 0.37 mm. The needle valve member may lift off the valve seat by a distance of 0.35 mm.

The injector body 12 may further comprise a nozzle cap nut (not shown). Spray nozzle 14 may be mounted to the injector body 12 by the nozzle cap nut which may clamp the fuel passage to the fuel passage in the spray nozzle 14. The spray nozzle 14 may extend from the nozzle cap nut. The spray nozzle 14 may extend axially from the nozzle cap nut along central axis P. Nozzle cap nut may be coaxially aligned with the spray nozzle 14.

Nozzle cap nut may have a bearing surface positioned opposite the injector body 12. The bearing surface may represent a plane that is normal to the central axis P. Spray nozzle 14 may extend axially from the bearing surface along central axis P. Spray nozzle 14 may have a nozzle length which is the axial distance from the bearing surface to the tip 16. The nozzle length may be approximately 21.3 mm to 21.7 mm. The nozzle length may be approximately 21.45 mm.

With reference to Figure 3, tip 16 may have a part-spherical shape. A proximal portion 18 of the tip 16 may be connected to the nozzle body 15 and a distal portion 20 of the tip 16 may be disposed opposite to the proximal portion 18 and the nozzle body 15. Distal portion 20 may be collinear with the central axis P. Tip 16 may have a side 22 that may be formed between proximal portion 18 and distal portion 20.

Tip 16 may comprise the valve seat that is formed on the inner surface of the side 22. Needle valve member may rest against the valve seat so as to prevent flow of fuel from the fuel passage through to the portion of the fuel passage downstream of the valve seat. Needle valve member may extend into the inner section of the tip 16. Needle valve member may be lapped in the inner section of the tip 16.

Fuel injector 10 may comprise a plurality of spray discharge orifices 24 formed on the tip 16. Fuel in the injector body 12 may be expelled from the plurality of spray discharge orifices 24. Fuel may be discharged from the plurality of spray discharge orifices 24 at a flow rate of 680 to 720 cc/min. Fuel may be expelled from the plurality of spray discharge orifices 24 at a flow rate of 700 cc/min.

The plurality of spray discharge orifices 24 may be dimensioned to inject fuel vapour at a flow rate of 680 to 720 cc/min into a combustion chamber. The plurality of spray discharge orifices 24 may be dimensioned to inject fuel vapour at a flow rate of 700 cc/min into a combustion chamber.

In an embodiment, each spray discharge orifice 24 may be circular. The plurality of spray discharge orifices 24 may have the same diameters. The spray discharge orifices 24 may each have a diameter of 0.136mm.

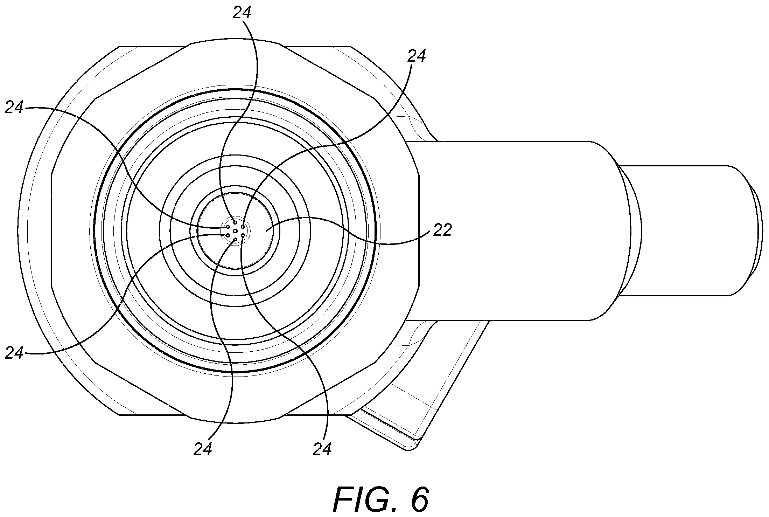

Spray discharge orifices 24 are openings of through spray discharge passages (not shown) that extend through the tip 16. Each spray discharge orifice 24 extends through the side 22 (see Figure 6) and has an inlet (not shown) that communicates with the fuel passage. The inlets are arranged radially about the central axis P. The inlet of each spray discharge orifice 24 may be disposed downstream of the valve seat.

In an embodiment, each inlet may be circular. Plurality of inlets may have the same diameter. Each inlet may have the same diameter as the respective spray discharge orifice 24. A plane across each inlet may be parallel to a plane across the respective spray discharge orifice 24.

Each spray discharge orifice 24 is connected to the respective inlet by the spray discharge passage. The spray discharge passages may extend radially from the central axis P. In an embodiment, the plurality of spray discharge passages may have the same length.

Fuel in the fuel passage may be pressurised. Fuel may be pressurised by an external high-pressure pump (not shown). Fuel may be pressurised to a pressure of 10 MPa. The fuel discharged from the plurality of spray discharge orifices 24 may be at a pressure of 10 MPa. The fuel from the plurality of spray discharge orifices 24 may be injected into the combustion chamber at a pressure of 10 MPa.

The cylinder side back pressure may be between 16.5 MPa and 18 MPa. The leak off back pressure may be limited to 60 KPa. The fuel vapour may be injected at a flow rate of between 679 cc/min and 721 cc/min when the cylinder side back pressure is at 9.8 MPa. The fuel vapour may be in injected at a flow rate of 700 cc/min when the cylinder side back pressure is at 9.8 KPa. The fuel vapour may be injected at a flow rate of 700 cc/min when the leak off back pressure is at 10 KPa.

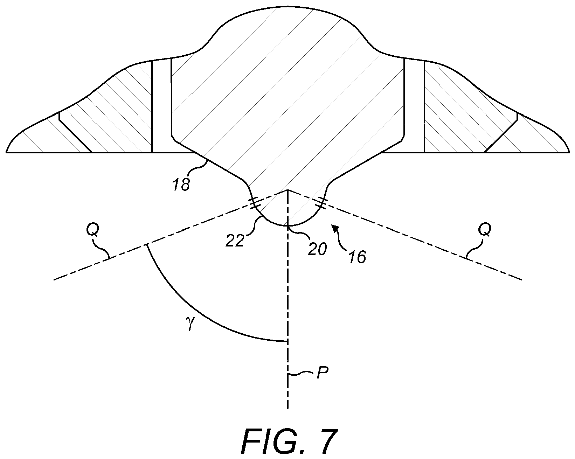

Referring to Figure 7, each spray discharge orifice 24 may have a central axis Q. Central axis Q may pass through the centre point of each spray discharge orifice 24. In an embodiment, each central axis Q may be transverse to a plane extending across each respective spray discharge orifice 24. In an embodiment, each spray discharge passage has a longitudinal axis that is coincident with central axis Q of respective spray discharge orifice 24. Each respective spray discharge passage may extend along the central axis Q. In an embodiment, each central axis Q may be normal to a plane extending across each respective inlet.

Each central axis Q Q may have an angle γ relative to the central axis P. Each central axis Q may have an angle γ of approximately 63 ° to 67 ° relative to the central axis P. Each central axis Q may have an angle γ of approximately 65 ° relative to the central axis P.

Fuel injector 10 may have a spray cone angle that is defined by angle 2γ. Accordingly, fuel vapour from the plurality of spray discharge orifices 24 may be discharged with a spray cone angle of approximately 126 ° to 134 °. Fuel vapour from the plurality of spray discharge orifices 24 may be discharged with a spray cone angle of approximately 130 °.

Figure 6 shows the spray discharge orifices 24 on the tip 16 viewed from within the cylinder. The plurality of spray discharge orifices 24 may be disposed around the central axis P. Plurality of spray discharge orifices 24 may be disposed radially about the central axis P. Spray discharge orifices 24 may be equidistant from central axis P. Plurality of spray discharge orifices 24 may be mutually angularly spaced about the central axis P.

Plurality of spray discharge orifices 24 may be disposed around the distal portion 20. Plurality of spray discharge orifices 24 may be disposed radially about distal portion 20. Spray discharge orifices 24 may be equidistant from distal portion 20. Plurality of spray discharge orifices 24 may be mutually angularly spaced about the distal portion 20.

The plurality of spray discharge orifices 24 may be disposed on the side 22 of the tip 16.

The fuel injector 10 may have six spray discharge orifices 24 disposed radially about the central axis P. Fuel injector 10 may have six spray discharge orifices 24 disposed radially about the distal portion 20. The six spray discharge orifices 24 may be mutually spaced about the central axis P or the distal portion 20. The six spray discharge orifices 24 may be mutually angularly spaced about the central axis P or the distal portion 20.

With reference to Figure 3, the spray nozzle 14 may have a discharge orifice distance (z) which is the axial distance from the bearing surface 28 to a spray discharge orifice 24. The discharge orifice distance may be the axial distance from the bearing surface 28 to the centre point of a spray discharge orifice 24. The discharge orifice distance may be 20.15 mm to 20.45 mm. The discharge orifice distance may be 20.30 mm.

The plurality of spray discharge orifices 24 may be arranged on a plane on the tip 16. Spray discharge orifices 24 may have a coplanar arrangement on the side 22. The plane of the spray discharge orifices 24 may be perpendicular to the central axis P.

In an embodiment, the centre point of each spray discharge orifice 24 may lie on the plane. The discharge orifice distance may be the axial distance from the bearing surface 28 to the plane of the centre points of the spray discharge orifices 24.

In an embodiment, the circumferential point of each spray discharge orifice 24 proximate to the distal portion 20 may lie on the plane. The discharge orifice distance may be the axial distance from the bearing surface 28 to the plane of said circumferential points of the spray discharge orifices 24.

The longitudinal distance (parallel to the axis P) from a flame face at the cylinder head 200 to the tip of the spray nozzle 14 may be 2.25 mm. The longitudinal distance from the flame face at the cylinder head 200 to the spray discharge orifices 24 may be 1.6 mm. The longitudinal distance from the spray discharge orifices 24 to the tip of the spray nozzle 14 may be 0.65 mm. The radial distance from the axis P to a periphery of the spray nozzle 14 at the logintudinal position of the discharge orifices 24 may be 1.04 mm.

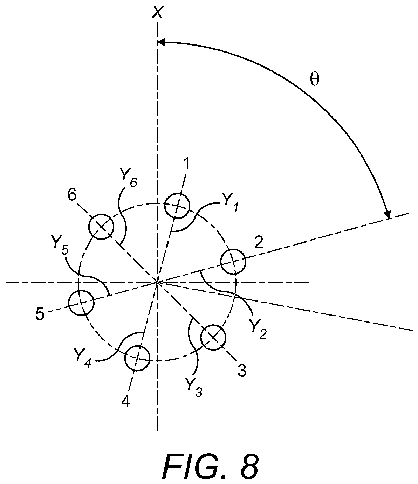

The spray discharge orifices 24 may be distributed evenly about the distal portion 20. Accordingly, in an embodiment having six spray discharge orifices 24, the orifices may be separated by an angle of 60 °, as can be seen in Figure 8.

The injector body inlet 300 may be said to have a component of direction projecting along an axis X in a plane orthogonal to the axis P. A first of the spray discharge orifices 24 may be said to have a component of direction projecting along an axis Y₁ in the plane orthogonal to the axis P. An angle,θ₁, between the axis X and the axis Y₁ may be between 11.5 ° and 17.5 °. The angle between the axis X and the axis Y₁ may be between 13.5 ° and 15.5 °. The angle between the axis X and the axis Y₁ may be between 14.5 °.

A second of the spray discharge orifices 24 may be said to have a component of direction projecting along an axis Y₂ in the plane orthogonal to the axis P. Similarly, in an embodiment having six spray discharge orifices, a third, fourth, fifth and sixth spray discharge orifice 24 may be said to have a component of direction projecting along an axis Y₃, Y₄, Y₅, Y₆, respectively, in the plane orthogonal to the axis P. An angle between X and Y₂ may be θ₂; an angle between X and Y₃ may be θ₃; angle between X and Y₄ may be θ₄; angle between X and Y₅ may be θ₅; angle between X and Y₆ may be θ₆.

An angle between Yₙ (where 1 ≤n≤6) and Yₙ₊₁ may be 60 °. An angle between Yₙ and Yₙ₋₁ may be 60 °. Accordingly, an angle between Y₆ and X may be between 42.5 ° and 48.5 °. The angle between Y₆ and X may be between 44.5 ° and 46.5 °. The angle between Y₆ and X may be 45.5 °

These angular relationships are evident in Figure 8.

In embodiments having a glow plug projecting into the cylinder, it may be that the glow plug is aligned with axis X.

In this way, injection of fuel from the first spray discharge orifice 24 may be angularly separated from a closest of the spray discharge orifices 24 by a minimum of θ₁. This may be selected for effective operation of the or glow plug when in use whilst minimising interference from the glow plug when not in use.

The fuel injector 10 may further comprise a combustion washer (30). Combustion washer 30 may be disposed about the spray nozzle 14 and in abutting contact with the bearing surface.

The combustion washer 30 may be an annulus with an inner orifice and an external perimeter. Nozzle body 15 of the spray nozzle 14 may be inserted through the inner orifice. Combustion washer 30 may be coaxially aligned with the spray nozzle 14. External perimeter may be flush with the surface of the nozzle cap nut that is adjacent to the bearing surface.

The combustion washer 30 may be made of compressible material. The combustion washer 30 may be compressed uniformly across its structure. The combustion washer 30 may have a material specification of E-Cu58 and a hardness of Hv40-50.

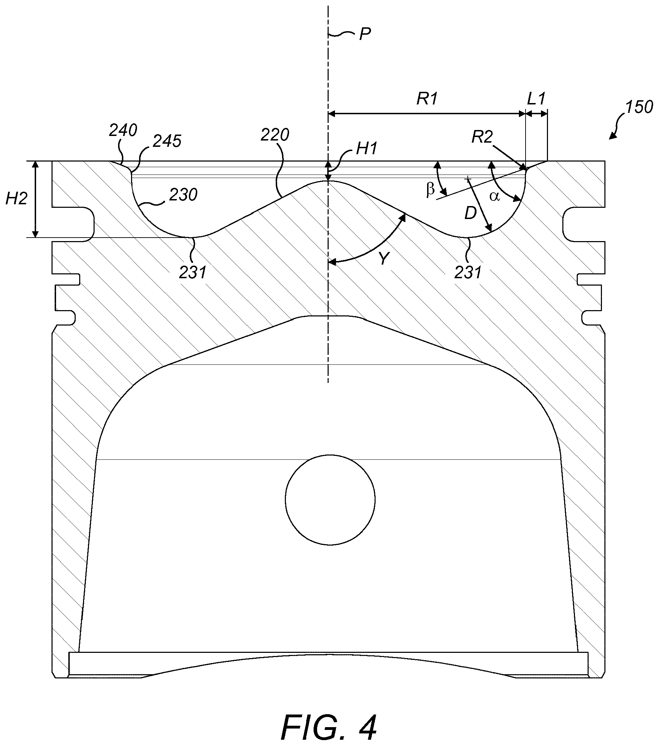

The piston 130 of Figure 1 is shown in enlarged view in Figure 4. In particular, Figure 4 shows a cross-section through the central axis P of the piston crown 150. In this embodiment, the piston crown 150 is rotationally symmetrical about the central axis P. Accordingly, the piston bowl 170 has a circular throat facing the direction of the fuel injector 10. The piston bowl 170 has a bowl throat radius, R1, defined as a distance in the radial direction between the central axis P of the piston crown 150 and the radially inmost portion 245 of the annular surface 240. Radius R1 may be approximately 31 mm, or between 31.06 mm and 31.16 mm, or 31.11 mm.

The piston crown 150 comprises an annular surface 160 at a first end of the piston crown 150 in the axial direction that, when in situ in the cylinder, faces the fuel injector 10. The annular surface 160 may be radially furthest from the central axis P.

The piston crown 150 further comprises a piston bowl 170 located radially within the annular surface 160 and recessed relative to the first end of the piston crown 150.

The piston bowl 170 comprises a raised floor 220 in a radially central region of the piston bowl 170.

The piston bowl 170 has a central height H1 at a centre of the raised floor 220. The piston bowl central height, H1, may be approximately 3.6 mm.

The piston bowl 170 further comprises an arcuate surface 230 located radially outward relative to the raised floor 220. The piston bowl 210 further comprises a lip chamfer surface 240 extending radially outwardly from the arcuate surface 230 and radially inwardly from the annular surface 150. The lip chamfer surface may have an axial length, L1, of approximately 3.99 mm.

The piston bowl 170 has a bowl height, H2, defined as a distance in the axial direction between the annular surface 160 and a surface 231 of the piston bowl furthest from the annular surface 160. In the illustrated embodiment the surface 231 of the piston bowl furthest from the annular surface 160 is located at a radially inner point of the arcuate surface 230 where it meets the raised floor 220.

The piston bowl height, H2, may be between 12.19 mm and 12.49 mm. The piston bowl height, H2, may be 12.34 mm.

The lip chamfer surface may be angled at angle β which may be approximately 20 ° from the annular surface 230.

The arcuate surface 230 may have a radius of approximately 9.2 mm.

A radius of transition between the chamfer surface 240 and the piston bowl 170 may have a radius of between 29 mm and 31 mm.

The skilled person would appreciate that foregoing embodiments may be modified or combined to obtain the fuel injector 10 of the present invention.

### Industrial Applicability

This invention describes a fuel injector 10 for an internal combustion engine. The internal combustion engine may be a diesel engine. The internal combustion engine may be a direct-injection engine. The internal combustion engine may be a four cylinder engine. The fuel injector 10 may reduce particulate matter emission in exhaust gases by decreasing the production of particulate matter during combustion of the fuel vapour in a combustion chamber. At higher injection pressures, the fuel injector 10 may provide a finer atomized spray leading to a more complete burn. Fuel vapour may be discharged with a spray cone angle of approximately 130 °. With the fuel injector 10 mounted to a combustion chamber 36, the fuel vapour may be injected in a direction substantially towards the piston bowl 46.

Accordingly, this invention includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the invention may be embodied in other specific forms without departing from the invention or essential characteristics thereof. The foregoing embodiments are therefore to be considered in all respects illustrative rather than limiting of the invention herein.

## Claims

1. A combustion cylinder assembly for an internal combustion engine (100), the combustion cylinder assembly comprising:
a combustion cylinder (120);
a glow plug projecting into the combustion cylinder;
a piston (130) movable reciprocally within the combustion cylinder (120); and
a fuel injector (10) configured to inject fuel vapour into the combustion cylinder (120) of the internal combustion engine (100), the fuel injector (10) comprising:
an injector body (12) having a central axis and being mountable to the internal combustion engine (100) such that the fuel injector projects into the combustion chamber (110);
an inlet (300) for supplying fuel to the fuel injector (10), the inlet (300) projecting from the injector body (12) at a first circumferential position of the injector body (12) and having a component of projection, X, radially outward relative to the central axis;
a spray nozzle (14) having a tip (16), the spray nozzle (14) extending longitudinally from the injector body (12); and
a plurality of spray discharge orifices (24) formed on the tip (16) having an even radial distribution about the tip (16), each spray discharge orifice (24) configured to discharge fuel vapour;
**characterized in that**
each spray discharge orifice (24) has a component of direction parallel to the central axis and a component of direction, Y, radially outward relative to the central axis;
wherein the glow plug is aligned with axis X; and
wherein Y is at an angle offset from X.

2. The combustion cylinder assembly of claim 1 wherein a first of the plurality of spray discharge orifices (24) has a radially outward component of direction, Y₁, offset from X by an angle of between 11.5 ° and 17.5 °.

3. The combustion cylinder assembly of claim 2 wherein the first of the plurality of spray discharge orifices (24) has a radially outward component of direction, Y₁, offset from X by an angle of between 13.5 ° and 15.5 °.

4. The combustion cylinder assembly of claim 3 wherein the first of the plurality of spray discharge orifices (24) has a radially outward component of direction, Y₁, offset from X by an angle of 14.5 °.

5. The combustion cylinder assembly of any preceding claim wherein the plurality of spray discharge orifices (24) consists of six spray discharge orifices (24).

6. The combustion cylinder assembly of any preceding claim wherein each spray discharge orifice (24) has an orifice axis wherein an angle between each orifice axis and the central axis is between 60 ° and 70 °.

7. The combustion cylinder assembly of claim 6 wherein the angle between each orifice axis and the central axis is between 63 ° and 67 °.

8. The combustion cylinder assembly of claim 7 wherein the angle between each orifice axis and the central axis is between 64 ° and 66 °.

9. The combustion cylinder assembly of claim 8 wherein the angle between each orifice axis and the central axis is 65 °.

10. The combustion cylinder assembly of any preceding claim configured to supply fuel at a rate of 700 cubic centimetres per minute.

11. The combustion cylinder assembly of any preceding claim configured to supply fuel at a pressure of 10 MPa.

12. The combustion cylinder assembly of any preceding claim wherein the piston (130) comprises:
a piston crown (150) having an annular outer surface (160) located to face the fuel injector (10) and a piston bowl (170) recessed relative to and radially inward of the annular surface (160);
wherein the piston crown (150) comprises a chamfer surface (240) extending radially outwardly of the piston bowl (170) and radially inwardly of the annular surface (160).

13. The combustion cylinder assembly of claim 12 wherein a transition between the chamfer surface (240) and the piston bowl (170) has a radius of between 29 mm and 31 mm.

14. An internal combustion engine comprising one of more combustion cylinder assemblies in accordance with any preceding claim.

## Patentansprüche

1. Verbrennungszylinderanordnung für einen Verbrennungsmotor (100), die Verbrennungszylinderanordnung umfassend:
einen Verbrennungszylinder (120);
eine Glühkerze, die in den Verbrennungszylinder hineinragt;
einen Kolben (130), der innerhalb des Verbrennungszylinders (120) reziprok bewegbar ist; und
eine Kraftstoff-Einspritzdüse (10), die konfiguriert ist, um Kraffstoffdunst in den Verbrennungszylinder (120) des Verbrennungsmotors (100) einzuspritzen, die Kraftstoff-Einspritzdüse (10) umfassend:
einen Einspritzdüsenkörper (12), der eine Mittelachse aufweist und an dem Verbrennungsmotor (100) montierbar ist, derart, dass die Kraftstoff-Einspritzdüse in die Brennkammer (110) hineinragt;
einen Einlass (300) zum Zuführen von Kraftstoff zu der Kraftstoff-Einspritzdüse (10), wobei der Einlass (300) von dem Einspritzdüsenkörper (12) an einer ersten Umfangsposition des Einspritzdüsenkörpers (12) vorragt und eine radial nach außen gerichtete Vorsprungskomponente, X, relativ zu der Mittelachse aufweist;
eine Sprühdüse (14) die eine Spitze (16) aufweist, wobei sich die Sprühdüse (14) von dem Einspritzdüsenkörper (12) in Längsrichtung erstreckt; und
eine Vielzahl von Sprühauslassöffnungen (24), die an der Spitze (16) ausgebildet sind, die eine gleichmäßige radiale Verteilung um die Spitze (16) aufweisen, wobei jede Sprühauslassöffnung (24) konfiguriert ist, um Kraffstoffdunst auszulassen;
**dadurch gekennzeichnet, dass** jede Sprühauslassöffnung (24) eine Richtungskomponente, die zu der Mittelachse parallel ist, und eine radial nach außen gerichtete Richtungskomponente, Y, relativ zu der Mittelachse, aufweist;
wobei die Glühkerze an der Achse X ausgerichtet ist; und
wobei Y in einem Winkel von X versetzt ist.

2. Verbrennungszylinderanordnung nach Anspruch 1, wobei eine erste der Vielzahl von Sprühauslassöffnungen (24) eine radial nach außen gerichtete Richtungskomponente, Y₁, aufweist, die von X um einen Winkel von zwischen 11,5° und 17,5° versetzt ist.

3. Verbrennungszylinderanordnung nach Anspruch 2, wobei die erste der Vielzahl von Sprühauslassöffnungen (24) eine radial nach außen gerichtete Richtungskomponente, Y₁, aufweist, die von X um einen Winkel von zwischen 13,5° und 15,5° versetzt ist.

4. Verbrennungszylinderanordnung nach Anspruch 3, wobei die erste der Vielzahl von Sprühauslassöffnungen (24) eine radial nach außen gerichtete Richtungskomponente, Y₁, aufweist, die von X um einen Winkel von 14,5° versetzt ist.

5. Verbrennungszylinderanordnung nach einem der vorstehenden Ansprüche, wobei die Vielzahl von Sprühauslassöffnungen (24) aus sechs Sprühauslassöffnungen (24) besteht.

6. Verbrennungszylinderanordnung nach einem der vorstehenden Ansprüche, wobei jede Sprühauslassöffnung (24) eine Öffnungsachse aufweist, wobei ein Winkel zwischen jeder Öffnungsachse und der Mittelachse zwischen 60° und 70° ist.

7. Verbrennungszylinderanordnung nach Anspruch, 6, wobei der Winkel zwischen jeder Öffnungsachse und der Mittelachse zwischen 63° und 67° ist.

8. Verbrennungszylinderanordnung nach Anspruch 7, wobei der Winkel zwischen jeder Öffnungsachse und der Mittelachse zwischen 64° und 66° ist.

9. Brennzylinderanordnung nach Anspruch 8, wobei der Winkel zwischen jeder Öffnungsachse und der Mittelachse 65° ist.

10. Verbrennungszylinderanordnung nach einem der vorstehenden Ansprüche, die konfiguriert ist, um Kraftstoff in einer Geschwindigkeit von 700 Kubikzentimetern pro Minute zuzuführen.

11. Verbrennungszylinderanordnung nach einem der vorstehenden Ansprüche, die konfiguriert ist, um Kraftstoff bei einem Druck von 10 Mpa zuzuführen.

12. Verbrennungszylinderanordnung nach einem der vorstehenden Ansprüche, wobei der Kolben (130) umfasst:
einen Kolbenboden (150), der eine ringförmige Außenoberfläche (160), die positioniert ist, um der Kraftstoff-Einspritzdüse (10) zugewandt zu sein, und eine Kolbenmulde (170), die relativ zu und radial nach innen von der ringförmigen Oberfläche (160) ausgespart ist, aufweist;
wobei der Kolbenboden (150) eine abgeschrägte Oberfläche (240) umfasst, die sich von der Kolbenmulde (170) radial nach außen und von der ringförmigen Oberfläche (160) radial nach innen erstreckt.

13. Verbrennungszylinderanordnung nach Anspruch 12, wobei ein Übergang zwischen der abgeschrägten Oberfläche (240) und der Kolbenmulde (170) einen Radius von zwischen 29 mm und 31 mm aufweist.

14. Verbrennungsmotor, umfassend eine von mehreren Verbrennungszylinderanordnungen nach einem der vorstehenden Ansprüche.

## Revendications

1. Ensemble cylindre de combustion pour un moteur à combustion interne (100), ledit ensemble cylindre de combustion comprenant :
un cylindre de combustion (120) ;
une bougie de préchauffage faisant saillie dans le cylindre de combustion ;
un piston (130) mobile réciproquement à l'intérieur du cylindre de combustion (120) ; et
un injecteur de carburant (10) conçu pour injecter de la vapeur de carburant dans le cylindre de combustion (120) du moteur à combustion interne (100), l'injecteur de carburant (10) comprenant :
un corps d'injecteur (12) ayant un axe central et pouvant être monté sur le moteur à combustion interne (100) de telle sorte que l'injecteur de carburant fait saillie dans la chambre de combustion (110) ;
une entrée (300) pour fournir du carburant à l'injecteur de carburant (10), l'entrée (300) faisant saillie à partir du corps d'injecteur (12) au niveau d'une première position circonférentielle du corps d'injecteur (12) et ayant une composante de projection, X, radialement orientée vers l'extérieur par rapport à l'axe central ;
une buse de pulvérisation (14) ayant une pointe (16), la buse de pulvérisation (14) s'étendant longitudinalement depuis le corps d'injecteur (12) ; et
une pluralité d'orifices de décharge de pulvérisation (24) formés sur la pointe (16) ayant une distribution radiale régulière autour de la pointe (16), chaque orifice de décharge de pulvérisation (24) étant conçu pour décharger la vapeur de carburant ;
**caractérisé en ce que** chaque orifice de décharge de pulvérisation (24) a une composante de direction parallèle à l'axe central et une composante de direction, Y, radialement orientée vers l'extérieur par rapport à l'axe central ;
dans lequel la bougie de préchauffage est alignée sur l'axe X ; et
dans lequel Y se trouve à un angle décalé par rapport à X.

2. Ensemble cylindre de combustion selon la revendication 1 dans lequel un premier parmi la pluralité d'orifices de décharge de pulvérisation (24) a une composante de direction radialement orientée vers l'extérieur, Y₁, décalée par rapport à X d'un angle compris entre 11,5 ° et 17,5 °.

3. Ensemble cylindre de combustion selon la revendication 2 dans lequel le premier parmi la pluralité d'orifices de décharge de pulvérisation (24) a une composante de direction radialement orientée vers l'extérieur, Y₁, décalée par rapport à X d'un angle compris entre 13,5 ° et 15,5 °.

4. Ensemble cylindre de combustion selon la revendication 3 dans lequel le premier parmi la pluralité d'orifices de décharge de pulvérisation (24) a une composante de direction radialement orientée vers l'extérieur, Y₁, décalée par rapport à X d'un angle de 14,5 °.

5. Ensemble cylindre de combustion selon l'une quelconque des revendications précédentes dans lequel la pluralité d'orifices de décharge de pulvérisation (24) est constituée de six orifices de décharge de pulvérisation (24).

6. Ensemble cylindre de combustion selon l'une quelconque des revendications précédentes dans lequel chaque orifice de décharge de pulvérisation (24) a un axe d'orifice dans lequel un angle entre chaque axe d'orifice et l'axe central est compris entre 60 ° et 70 °.

7. Ensemble cylindre de combustion selon la revendication 6 dans lequel l'angle entre chaque axe d'orifice et l'axe central est compris entre 63 ° et 67 °.

8. Ensemble cylindre de combustion selon la revendication 7 dans lequel l'angle entre chaque axe d'orifice et l'axe central est compris entre 64 ° et 66 °.

9. Ensemble cylindre de combustion selon la revendication 8 dans lequel l'angle entre chaque axe d'orifice et l'axe central est de 65 °.

10. Ensemble cylindre de combustion selon l'une quelconque des revendications précédentes conçu pour fournir du carburant à une vitesse de 700 centimètres cubes par minute.

11. Ensemble cylindre de combustion selon l'une quelconque des revendications précédentes conçu pour fournir du carburant à une pression de 10 MPa.

12. Ensemble cylindre de combustion selon l'une quelconque des revendications précédentes dans lequel le piston (130) comprend :
une couronne de piston (150) ayant une surface externe annulaire (160) placée pour faire face à l'injecteur de carburant (10) et une cloche de piston (170) en retrait par rapport à et radialement en direction de l'intérieur de la surface annulaire (160) ;
dans lequel la couronne de piston (150) comprend une surface de chanfrein (240) s'étendant radialement en direction de l'extérieur de la cloche de piston (170) et radialement en direction de l'intérieur de la surface annulaire (160).

13. Ensemble cylindre de combustion selon la revendication 12 dans lequel une transition entre la surface de chanfrein (240) et la cloche de piston (170) a un rayon compris entre 29 mm et 31 mm.

14. Moteur à combustion interne comprenant un des ensembles de cylindres de combustion selon l'une quelconque des revendications précédentes.
